# EUROPÄISCHE PATENTSCHRIFT

(11) **EP 1 066 666 B1**
(45) Veröffentlichungstag und Bekanntmachung des Hinweises auf die Patenterteilung: **06.08.2008**
(21) Anmeldenummer: 00906269.6
(22) Anmeldetag: 02.02.2000
(51) Int. Cl.: H01S 3/104, H01S 3/0975, H01S 3/038, B23K 26/06

(54) **LASER MIT EINER EINRICHTUNG ZUR VERÄNDERUNG DER VERTEILUNG DER INTENSITÄT DES LASERLICHTES ÜBER DEN LASERSTRAHLQUERSCHNITT**
LASER WITH DEVICE FOR MODIFYING THE DISTRIBUTION OF LASER LIGHT INTENSITY ACROSS THE LASER BEAM CROSS-SECTION
LASER MUNI D'UN DISPOSITIF POUR MODIFIER LA REPARTITION DE L'INTENSITE DE LA LUMIERE LASER SUR LA SECTION TRANSVERSALE DU FAISCEAU LASER

(30) Priorität: 03.02.1999 DE 19904204; 03.02.1999 DE 19904205
(43) Veröffentlichungstag der Anmeldung: 10.01.2001
(73) Patentinhaber: TRUMPF LASERTECHNIK GmbH, D-71254 Ditzingen (DE)
(72) Erfinder: VON BORSTEL, Michael, D-74385 Pleidelsheim (DE); ACKERMANN, Frank, D-70178 Stuttgart (DE); GESCHWANDNER, Mark, D-70839 Gerlingen (DE)
(74) Vertreter: Kohler Schmid Möbus
(86) Internationale Anmeldenummer: PCT/EP2000/000832
(87) Internationale Veröffentlichungsnummer: WO 2000/046891

(56) Entgegenhaltungen:
- WO-A-96/24181
- DE-A- 3 931 082
- US-A- 4 618 961
- PATENT ABSTRACTS OF JAPAN vol. 015, no. 050 (E-1030), 6. Februar 1991 (1991-02-06) -& JP 02 281670 A (MATSUSHITA ELECTRIC IND CO LTD), 19. November 1990 (1990-11-19)
- PATENT ABSTRACTS OF JAPAN vol. 011, no. 143 (E-504), 9. Mai 1987 (1987-05-09) -& JP 61 280689 A (MITSUBISHI ELECTRIC CORP), 11. Dezember 1986 (1986-12-11)
- PATENT ABSTRACTS OF JAPAN vol. 014, no. 168 (E-0912), 30. März 1990 (1990-03-30) -& JP 02 023684 A (MATSUSHITA ELECTRIC IND CO LTD), 25. Januar 1990 (1990-01-25)

## Beschreibung

Die Erfindung betrifft einen Laser gemäß dem Oberbegriff von Anspruch 1.

Ein derartiger Laser ist beispielsweise durch die EP 0 565 262 A1 bekannt geworden.

Laser mit einem Gehäuse, einer Elektrodenanordnung sowie einer Spannungs-Versorgungseinheit zum Anlegen einer Spannung an Elektroden der Elektrodenanordnung sind beispielsweise bekannt aus US-A-4,757,511. Aus dieser Druckschrift - auf die im übrigen zur Erläuterung aller hier nicht näher beschriebenen Einzelheiten ausdrücklich verwiesen wird - sind Laser bekannt, bei denen das Lasergas ein Gemisch aus einem laseraktiven Gas - insbesondere CO oder CO₂ - und einigen weiteren Komponenten, z.B. N₂ und Helium, ist. Derartige Laser werden u.a. zum Bearbeiten, wie Schneiden oder Schweißen, von Werkstücken eingesetzt. Die an die Elektroden der Elektrodenanordnung angelegte Spannung kann dabei eine Gleich- oder eine Wechselspannung sein. Bevorzugt wird eine hochfrequente Wechselspannung (HF-Spannung). Die Elektroden der Elektrodenanordnung können dabei an oder in dem Gehäuse angeordnet sein. Im Falle des aus der US-A-4,757,511 bekannten Lasers sind einzelne Elektrodenpaare gegeneinander verdreht, um - "integriert" über die Laserlänge - eine möglichst gleichförmige Entladung zu erhalten.

Bei der Bearbeitung von Werkstücken spielen vor allem die Leistung des Lasers und der Strahldurchmesser, der sowohl von der Geometrie des Laserrohres und der Elektrodenanordnung als auch von der jeweiligen Leistung abhängt, sowie die Verteilung der Intensität des Laserlichtes über den Querschnitt des unfokussierten Laserstrahls (auch als "Mode" bezeichnet) eine Rolle. Durch den Strahldurchmesser und die genannte Intensitätsverteilung wird die Breite eines Schnittspaltes oder einer Schweißnaht festgelegt. Von den beiden genannten Parametern gleichfalls abhängig sind die schneidbare Materialdicke sowie die erzielbare Schneidgeschwindigkeit. Ferner sind Strahldurchmesser und Mode maßgeblich für die thermische Belastung der zur Strahlformung und Strahlführung eingesetzten optischen Elemente. Ein Laserstrahl mit einem hohen Intensitätsmaximum in der Mitte, von dem aus die Intensität allseitig abfällt (auch als "Gauß-Mode" bezeichnet), lässt sich sehr gut auf einen kleinen Fleck fokussieren, so dass sich eine sehr große Energiedichte ergibt. Damit lassen sich hohe Schneidgeschwindigkeiten erzielen. Außerdem erhält man sehr schmale Schnittspalte, was beim Schneiden dünner Bleche wünschenswert ist. Andererseits werden allerdings beim Gauß-Mode gerade bei hohen Leistungen aufgrund des Intensitätsmaximums die zur Strahlformung und Strahlführung eingesetzten optischen Elemente thermisch stark belastet.

Beim Schneiden von dicken Blechen ist nicht nur eine große Laserleistung erforderlich. Darüber hinaus ist für das Ausblasen der Schlacke eine gewisse Mindestbreite des Schnittspaltes wünschenswert. Diese Forderungen können am besten durch einen Laserstrahl erfüllt werden, bei dem das Intensitätsmaximum des unfokussierten Strahls nicht in der Mitte sondern am Rand liegt (sogenannter "Ringmode"). Im Falle eines Ringmodes werden die optischen Elemente des betreffenden Lasers auch bei hohen Laserleistungen weniger als beim Gauß-Mode belastet, da die Energiedichte geringer ist.

Beim Schweißen ist die erforderliche Laserleistung ebenfalls sehr groß, während die Anforderungen an die Fokussierbarkeit des Laserstrahls vergleichsweise gering sind, da ja kein Schnittspalt erzeugt werden soll. Auch beim Schweißen wird üblicherweise mit einem Laserstrahl gearbeitet, der kein ausgeprägtes Intensitätsmaximum in der Mitte aufweist. Bei anderen Bearbeitungsvorgängen kann wiederum eine nahezu rechteckige Intensitätsverteilung (sogenannter "Flat-Top-Mode") zweckmäßig sein.

Unter den vorstehend beschriebenen Umständen ist es von besonderem Vorteil, wenn die Verteilung der Intensität des Laserlichtes über den Querschnitt des (unfokussierten) Laserstrahls, also der Mode, an den jeweils durchgeführten Bearbeitungsvorgang angepasst werden kann.

Bei einem Großteil der zur Zeit bekannten Laser wird der Mode durch die unveränderbare Geometrie des Laserrohres, die Anordnung der Elektroden und der Spiegel, durch die Einspeisung der Energie sowie die Eigenschaften des Gases bestimmt. Dieser vorgegebene Mode ist vom Laserbenutzer praktisch nicht zu beeinflussen. Eine Einstellung der Verteilung der Intensität des Laserlichtes über den Querschnitt des Laserstrahls zur Anpassung an den jeweiligen Anwendungsfall ist nicht ohne weiteres möglich. In der Vergangenheit hat man deshalb versucht, durch den Austausch von wesentlichen Komponenten oder ganzer Lasereinrichtungen bzw. -maschinen (Schneidlaser - Schweißlaser) eine Anpassung des Lasermodes an den jeweiligen Bearbeitungsfall zu erreichen. Diese Vorgehensweise erfordert nicht nur hohe Investitionskosten, sondern macht auch eine schnelle Umrüstung auf unterschiedliche Bearbeitungsvorgänge unmöglich.

Aus der JP 02 281670 A ist ein HF-angeregter Gaslaser mit zwei gasgefüllten Entladungsrohren bekannt, die über Elektroden angeregt werden. Die Elektroden sind mit einer HF-Spannungsquelle und Schaltelementen verbunden, über die die angelegte HF-Spannnung ein- und ausgeschaltet wird, d.h., die Entladungsrohren können getrennt oder gemeinsam betrieben werden. Bei geöffnetem ersten Schaltelement wird die HF-Spannung im ersten Entladungsrohr unterbrochen und nur Lasergas im zweiten Entladungsrohr angeregt. Der ausgekoppelte Laserstrahl weist ein ringförmiges Strahlprofil auf. Bei geöffnetem zweiten Schaltelement wird die HF-Spannung im zweiten Entladungsrohr unterbrochen und nur Lasergas im ersten Entladungsrohr angeregt. Der ausgekoppelte Laserstrahl weist ein gaußförmiges Strahlprofil auf. Wenn in beiden Entladungsrohren eine Anregung stattfindet, weist der Laserstrahl ein drittes Strahlprofil auf, das durch Überlagerung von gauß- und ringförmigem Strahlprofil entsteht.

Weiterhin ist aus der WO 96/24181 A ein gepulster, transversal angeregter Gaslaser bekannt, bei dem die Laserstrahlung im Wesentlichen in drei Schritten erfolgt. In einem ersten Schritt wird das Lasergas mittels Röntgenstrahlung ionisiert. In einem zweiten Schritt wird die Elektronendichte durch Vorentladung vergrößert, induziert durch einen ersten Hochspannungsimpuls. In einem dritten Schritt findet die Hauptentladung durch einen zweiten Hochspannungsimpuls statt, um eine Gasentladung zu induzieren. Nach der Entladung zwischen den Elektroden liegt ein Plasma mit scharfem Elektronendichtemaximum vor, wobei die Elektronenverteilung mit der Zeit breiter und weniger konzentriert wird. Da das Strahlprofil des Laserstrahls entscheidend durch das Elektronendichteprofil zum Zeitpunkt der Hauptentladung bestimmt wird, kann das Strahlprofil durch Steuerung der Zeitverzögerung zwischen Vor- und Hauptentladung und/oder der Rate, mit der sich das Elektronendichteprofil mit der Zeit ändert, geändert werden.

Ein Laser mit einer Einrichtung zur Veränderung der Verteilung der Intensität des Laserlichtes über den Laserstrahlquerschnitt ist auch aus DE-A-44 01 597 bekannt. Allerdings lässt diese Druckschrift offen, mittels welcher technischen Maßnahmen die Veränderung des Modes bewirkt wird.

Der Erfindung liegt nun die Aufgabe zugrunde, einen Laser der eingangs beschriebenen Art dahingehend weiterzubilden, dass eine Veränderung der Verteilung der Intensität des Laserlichtes über den Laserstrahlquerschnitt, d.h. eine Veränderung des Modes, zur Anpassung der Intensitätsverteilung bzw, des Modes an den jeweiligen Anwendungsfall mit einem geringen konstruktiven bzw. apparativen Aufwand möglich ist.

Diese Aufgabe wird erfindungsgemäß gelöst durch einen Laser mit den Merkmalen des Anspruchs 1. Das Tastverhältnis ist die Pulslänge bzw. Einschaltdauer pro Tastung/Pausenlänge, d.h. die Ausschaltdauer zwischen zwei aufeinanderfolgenden Tastungen.

Der Erfindung liegt folgende Überlegung zugrunde: Beim Einschalten der Spannung an den betreffenden Elektroden der Elektrodenanordnung "zündet" die Entladung des Lasergases oder Lasergasgemisches in aller Regel nicht gleichmäßig über die gesamten Flächen der Elektroden. Vielmehr bildet sich zunächst ein Entladungskanal zwischen zwei verhältnismäßig kleinen Bereichen an den Oberflächen der einander zugeordneten Elektroden aus. Die elektrischen Potentiale zwischen den einzelnen Bereichen der einander zugeordneten Elektroden bestimmen die Form und die Lage des sich ergebenden "Zünd-Entladungskanals". Damit gibt im wesentlichen die Ausbildung der Elektroden die Form und die Lage des Kanals vor, in dem die Entladung zündet. Die Entladung beginnt in demjenigen Bereich, in dem die Feldstärke am höchsten ist. Danach weitet sich der Entladungskanal in seitlicher Richtung (bezogen auf den Entladungskanal) aus, so dass eine Entladung auch zwischen Bereichen einander zugeordneter Elektroden "brennt", für welche die energetischen Verhältnisse ungünstiger als für den "Start-Bereich" sind, also für denjenigen Bereich, in dem die Entladung zunächst gezündet hat. Die Geschwindigkeit, mit welcher sich der Zünd-Entladungskanal bzw. -schlauch auf den gesamten - aufgrund der Elektrodenausbildung - möglichen Querschnitt des Gehäuses für das Lasergas oder das Lasergasgemisch, insbesondere auf den möglichen Querschnitt des Laserrohres ausweitet, hängt dabei im wesentlichen von der Geometrie der Elektroden und den Eigenschaften des Lasergases ab.

Betreibt man den Laser im Tastbetrieb, d.h. mit pulsierender Anregung, so liegt an den betreffenden Elektroden der Elektrodenanordnung die für die Entladung des Lasergases oder Lasergasgemisches erforderliche Spannung nicht dauernd an. Die Elektrodenspannung wird vielmehr ein- und ausgeschaltet. Als "Tastfrequenz" wird dann die Frequenz des EIN/AUS-Wechsels bezeichnet. Unter dem "Tastverhältnis" versteht man das Verhältnis zweier aufeinanderfolgender Einschaltdauern einerseits und der zwischen diesen Einschaltdauern liegenden Ausschaltdauer der Elektrodenspannung andererseits. An einem getasteten Laser bestimmt die Einschaltdauer Form und Lage der sich in jedem Querschnitt zwischen den jeweiligen Elektroden (zeitabhängig) bildenden Entladung. Die Form bzw. die Lage des Entladungskanales zwischen den betreffenden Elektroden definiert wiederum die Dichteverteilung der laseraktiven Teilchen des Lasergases oder Lasergasgemisches in dem jeweiligen Querschnitt des Gehäuses für das Lasergas oder das Lasergasgemisch bzw. das Verstärkungsprofil des Lasers.

Erfindungsgemäß ist die Form der einander zugewandten Elektrodenflächen derart gestaltet, dass durch die Wahl von unterschiedlichen Tastfrequenzen bzw. Tastbetriebsarten gezielt unterschiedliche Formen von Entladungsbereichen im Querschnitt des Gehäuses für das Lasergas oder das Lasergasgemisch und damit gezielt unterschiedliche Moden einstellbar sind.

Weist ein Laser beispielsweise ein oder mehrere Laserrohre mit Elektroden auf, an denen die Entladung in den Elektrodenrandbereichen startet, so ergibt sich bei hohen Tastfrequenzen ein randbetontes Verstärkungsprofil, da in der Mitte des Laserrohres nahezu keine Entladung stattfindet. Sind längs des bzw. der Laserrohre mehrere gegeneinander verdrehte Elektrodenpaare angeordnet, so summieren sich die randbetonten Verstärkungsprofile derart auf, dass der Laser in einem (nahezu rotationssymmetrischen) Ringmode arbeitet. Setzt man nun die Tastfrequenz herab, erfolgt auch im Zentrum des Laserrohres eine nennenswerte Entladung. Bei geeignet gewählter Tastfrequenz stellt sich dann ein Gauß-Mode oder ein "Flat-Top-Mode" ein.

Entsprechend ergibt sich bei einem Laser, dessen Elektroden so beschaffen sind, dass die Entladung von der Mitte der Elektroden aus beginnt, bei hohen Tastfrequenzen ein mittenbetonter Mode. Sind mehrere gegeneinander verdrehte Elektrodenpaare längs des oder der Laserrohre nacheinander angeordnet, so stellt sich ein Gauß-Mode ein, d.h., eine (nahezu) rotationssymmetrische Intensitätsverteilung mit einem Maximum auf der optischen Achse des Lasers und einem starken Abfall zum Rand hin. Durch Herabsetzen der Tastfrequenz bzw. durch Veränderung des Tastverhältnisses im Sinne einer Verlängerung der Zeit, während derer an den Elektroden der Elektrodenanordnung eine Spannung anliegt, vergrößert sich der Entladungsbereich im Querschnitt des Gehäuses für das Lasergas oder das Lasergasgemisch. Dadurch ändern sich Strahldurchmesser und Intensitätsverteilung. Die Mittenbetonung der Intensität des Laserlichtes über den Laserstrahlquerschnitt schwächt sich verglichen mit den zuvor herrschenden Verhältnissen ab.

Bei Verwendung von Elektroden, deren dem Lasergas oder Lasergasgemisch zugewandte Flächen mehrere unterschiedlich gestaltete Bereiche aufweisen, ist durch eine Änderung des Tastverhältnisses, also des Verhältnisses der Ein- und der Ausschaltzeiten der betreffenden Elektroden der Elektrodenanordnung, eine Umschaltung zwischen Gauß-Mode und Ringmode sowie gegebenenfalls weiteren Moden, wie z.B. dem "Flat-Top-Mode", möglich. Ausdrücklich sei an dieser Stelle klargestellt, dass es durch Umsetzung des erfindungsgemäßen Grundgedankens nicht nur möglich ist, den Mode eines Lasers auf die vorstehend genannten zwei oder drei Modearten umzuschalten, sondern dass auch andere, dem jeweiligen Bearbeitungsfall angepasste Moden, beispielsweise Moden mit einer asymmetrischen Intensitätsverteilung, erzeugt werden können. Dies ist beispielsweise durch die Kombination unterschiedlich geformter Elektroden und unterschiedlicher Drehwinkel einzelner Elektrodenpaare längs des Lasers möglich.

Weiterhin kann die Verdrehung einzelner Elektrodenpaare gegeneinander zwischen aufeinanderfolgenden Bearbeitungsvorgängen geändert werden.

Erfindungsgemäß liegt in jedem Punkt eines Anregungsquerschnittes eine andere Verstärkung vor, wobei unter einem Anregungsquerschnitt in dem vorstehenden Sinne ein Querschnitt senkrecht zu der Laserstrahlausbreitungsrichtung zu verstehen ist, in welchem eine Anregung des Lasergases oder Lasergasgemisches erfolgt. Die räumliche Verteilung dieser Verstärkungspunkte wird als Verstärkungsprofil bezeichnet. Dieses wiederum ist maßgebend für den sich einstellenden Mode. Indem die Erfindung zur Modeveränderung an dem Verstärkungsprofil eines Lasers ansetzt, unterscheidet sie sich beispielsweise von "Modeblenden" bekannter Art. Bei derartigen Modeblenden handelt es sich nämlich um Lochblenden, mittels derer eine Dämpfung von Moden bewirkt wird, die sich zunächst eingestellt haben.

Eine Möglichkeit zur Beeinflussung des Umfanges der in das Lasergas oder Lasergasgemisch eingekoppelten Anregungsleistung sind im Patentanspruch 2 beschrieben. Weitere Einzelheiten bezüglich der eingekoppelten Anregungsleistung ergeben sich aus den Patentansprüchen 3 bis 6.

Die Tastfrequenz kann dabei zwischen 0 Hz (keine Tastung, d.h. Dauerstrich- oder cw-Betrieb) und mehr als 100 kHz variierbar sein (die Frequenzangabe bezieht sich auf die Zahl der Tastungen, d.h. die Zahl der Einschaltvorgänge, pro Sekunde.)

In weiterer bevorzugter Ausgestaltung der Erfindung ist vorgesehen, dass an einer Steuereinheit für den Laser mehrere feste Tastfrequenzen einstellbar sind, von denen jede eine bestimmte Intensitätsverteilung bzw. einen bestimmten Mode bewirkt. Selbstverständlich ist es aber auch möglich, eine kontinuierliche Verstellbarkeit der Tastfrequenz und/oder des Tastverhältnisses vorzusehen.

Bei typischen Gaslasern, wie etwa CO₂- oder CO-Lasern für die Bearbeitung von Werkstücken, ist bevorzugtermaßen wenigstens eine Tastfrequenz größer als 10 kHz. Dabei kann die Tastfrequenz größer als 50 kHz, insbesondere größer als 80 kHz sein.

Wie bereits ausgeführt, ist für die Erfindung beispielsweise neben der Wahl von Tastfrequenz und Tastverhältnis auch die Gestaltung der dem Lasergas zugewandten Elektrodenflächen wesentlich.

An erfindungsgemäßen Lasern können Elektroden verschiedenster Anordnung oder Ausbildung zum Einsatz kommen. So können die Elektroden der Elektrodenanordnung etwa in Umfangsrichtung des Laserstrahls versetzt angeordnet sein, eine unterschiedliche Krümmung aufweisen und/oder eine unterschiedliche azimutale Erstreckung besitzen. Durch die mit dem Versatz der Elektroden verbundene Überlagerung der Entladungskanäle zwischen den einzelnen Elektroden lässt sich dann praktisch jeder gewünschte Mode erzeugen. Die einzelnen Elektroden können dabei auch in azimutaler Richtung voneinander beabstandet sein.

Durch die azimutale Erstreckung der Elektrodenflächen wird bei einer Zündung in der Mitte die sich bei niedrigen Tastfrequenzen einstellende Breite des Entladungskanals bzw. bei Zündung vom Rand her der Durchmesser des Rings bei einem Ringmode bestimmt.

Im Rahmen der Erfindung sind Elektrodenflächen denkbar, die im wesentlichen dem Verlauf der Oberfläche des Gehäuses für das Lasergas und Lasergasgemisch, also beispielsweise der Wandung eines runden oder mehreckigen Laserrohres, folgen.

Weiterhin können die Elektrodenflächen im zentralen Bereich wenigstens eine Erhebung, wie eine Spitze oder Kante, oder wenigstens einen Rücksprung, wie z.B. eine Nut, aufweisen. Im Falle einer Erhebung im zentralen Bereich beginnt die Entladung nach dem Einschalten der Spannung von der Erhebung aus, während im Falle eines Rücksprungs die Entladung von den diesen umgebenden Bereichen aus zündet.

Die Erhebungen können dabei durch Vorsprünge, Spitzen oder eine Dachkant-Ausbildung der jeweiligen Elektrodenfläche gebildet werden. Zweckmäßige Breiten- oder Tiefenverhältnisse an mit einem Rücksprung versehenen Elektroden ergeben sich aus den Patentansprüchen 9 und 10.

Generell müssen die Elektroden nicht alle gleich ausgebildet sein. Beispielsweise können sie an ihren dem Lasergas oder Lasergasgemisch zugewandten Seiten unterschiedlich gestaltete Flächen aufweisen. Allerdings ist es von Vorteil, wenn die Gestaltung der dem Lasergas zugewandten Flächen jeweils paarweise einander zugeordneter Elektroden gleich ist, da sich dann beim Zünden eine definierte Entladungsstrecke mit einer zweizähligen Symmetrieachse ergibt, die - wie nachstehend noch erläutert werden wird - die Einstellung einer rotationssymmetrischen Intensitätsverteilung vereinfacht.

Außerdem können die Elektroden der Elektrodenanordnung zumindest teilweise einen unterschiedlichen Abstand von der Achse des Laserstrahls besitzen.

Weiterhin ist es möglich, dass die dem Lasergas zugewandten Flächen wenigstens einzelner Elektroden aus mehreren Teilen bestehen, deren Gestaltung unterschiedlich ist. Mittels der Steuereinheit können sich dann die einzelnen Teile getrennt ansteuern lassen. Hierbei kann der Abstand der einzelnen Teile von der Achse des Laserstrahls und/oder die azimutale Erstreckung der einzelnen Teile unterschiedlich sein. Insbesondere ist es möglich, dass die Elektroden Erhebungen bzw. Vertiefungen, wie Rücksprünge bzw. Nuten etc. aufweisen. Die Entladung ist dann in Abhängigkeit von dem jeweiligen Abstand der einander zugeordneten Elektroden-Teilflächen unterschiedlich "intensiv".

Prinzipiell ist die Erfindung im Falle sämtlicher spannungsangeregter Laser umsetzbar. Besonders bevorzugt wird jedoch der Fall, dass die Spannungs-Versorgungseinheit eine Wechselspannung an die Elektroden anlegt und die Frequenz dieser Wechselspannung größer als 100 kHz ist und insbesondere zwischen 1 MHz und 100 MHz liegt (hochfrequenzangeregte Laser). Von der Frequenz der an die Elektroden angelegten Spannung zu unterscheiden ist die vorstehend genannte Tastfrequenz, d.h. die Frequenz, mit welcher die betreffenden Elektroden der Elektrodenanordnung an die Spannung angelegt bzw. von dieser getrennt werden.

Die Erfindung wird nachstehend anhand schematischer Darstellungen zu Ausführungsbeispielen näher erläutert. Auf die Zeichnungen wird hinsichtlich der Offenbarung aller im Text nicht näher erläuterten erfindungsgemäßen Einzelheiten ausdrücklich verwiesen. Es zeigen:
- Figur 1: eine erste Bauart eines Gaslasers in der Draufsicht,
- Figur 2: einen Schnitt entlang Linie II-II in Figur 1,
- Figur 3: eine der Elektroden gemäß den Figuren 1 und 2 in Einzeldarstellung,
- Fign. 4 und 5: eine zweite Bauart eines Gaslasers mit einem Laserrohr,
- Figur 6: Entladungsbereiche im Innern des Laserrohres gemäß Figur 4 sowie den resultierenden Mode,
- Figur 7: Entladungsbereiche im Innern des Laserrohres gemäß Figur 5 sowie den resultierenden Mode,
- Figur 8: eine dritte Bauart eines Gaslasers in der Draufsicht,
- Figur 9: einen Schnitt entlang Linie X-X in Figur 8,
- Figur 10: einen Schnitt entsprechend Figur 9 mit gegenüber Figur 9 abgewandelten Elektroden,
- Fign. 11 und 12: eine vierte Bauart eines Gaslasers mit einem Laserrohr,
- Figur 13: Entladungsbereiche im Innern des Laserrohres gemäß Figur 11 sowie den resultierenden Mode,
- Figur 14: Entladungsbereiche im Innern des Laserrohres gemäß Figur 12 sowie den resultierenden Mode,
- Figur 15: eine fünfte Bauart eines Gaslasers in der Draufsicht,
- Figur 16: einen Schnitt entlang Linie XVII-XVII in Figur 15,
- Fign. 17 und 18: eine sechste Bauart eines Gaslasers mit einem Laserrohr,
- Figur 19: Entladungsbereiche im Innern des Laserrohres gemäß Figur 17 sowie den resultierenden Mode, und
- Figur 20: Entladungsbereiche im Innern des Laserrohres gemäß Figur 18 sowie den resultierenden Mode.

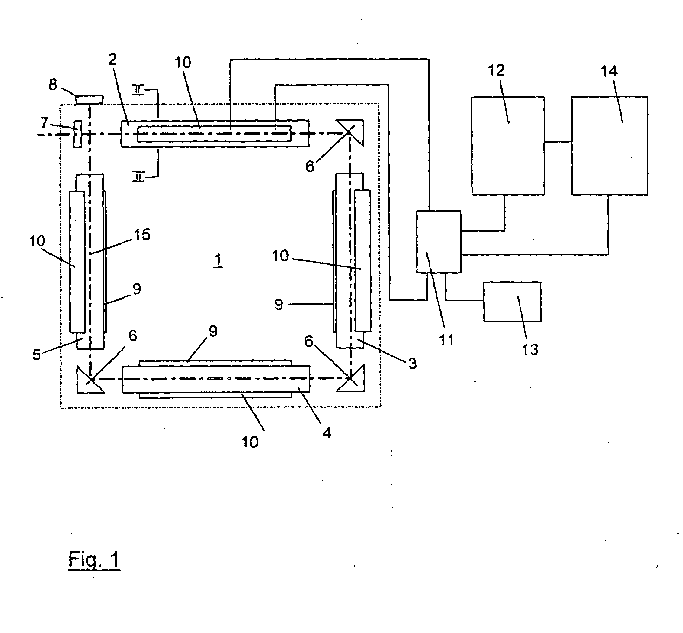

Ausweislich Figur 1 umfaßt ein Laser 1 vier Laserrohre 2, 3, 4, 5. Letztere dienen als Gehäuse für ein Lasergas, das im gezeigten Beispielsfall CO₂ oder CO enthält. Die Laserrohre 2, 3, 4, 5 besitzen einen runden Querschnitt und können aus Quarz oder einem Keramikmaterial, wie etwa Al₂O₃, bestehen.

Umlenkspiegel 6 befinden sich zwischen den Laserrohren 2, 3, 4, 5 und lenken einen mittels des Lasers 1 erzeugten und in Figur 1 strichpunktiert angedeuteten Laserstrahl 15 aus dem einen Laserrohr in das in Propagationsrichtung des Laserstrahls 15 nächste Laserrohr. Vor dem Laserrohr 2 befindet sich ein Auskoppelspiegel 7; hinter dem Laserrohr 5 ist ein Rückspiegel 8 angeordnet. Verwendet wird der gezeigte Laser 1 - ohne dass hierdurch eine Beschränkung der Erfindung auf bestimmte Lasertypen erfolgen würde - zur Materialbearbeitung.

Auf jedem der Laserrohre 2, 3, 4, 5 ist ein Elektrodenpaar, bestehend aus Elektroden 9, 10, angeordnet. Im Falle des Lasers 1 erstrecken sich die Elektroden 9, 10 nahezu über die gesamte Länge des jeweiligen Laserrohres 2, 3, 4, 5. Darüber hinaus sind die Elektroden 9, 10 eines jeden Laserrohres 2, 3, 4, 5 gegenüber den Elektroden 9, 10 des oder der benachbarten Laserrohre 2, 3, 4, 5 um 45° um die Laserrohrachse gedreht. Zur Einstellung der Drehstellung der Elektrodenpaare 9, 10 bezüglich der jeweiligen Laserrohrachse kann eine Stelleinrichtung dienen.

Sämtliche Elektroden 9, 10 sind über eine Schalteinrichtung 11 mit einem HF-Generator 12 bzw. mit Massepotential 13 verbunden. Die Frequenz der mittels des HF-Generators 12 erzeugten Wechselspannung liegt zwischen 1 MHz und 100 MHz. Zur Steuerung sowohl der Schalteinrichtung 11 als auch des HF-Generators 12 dient eine Steuereinheit 14.

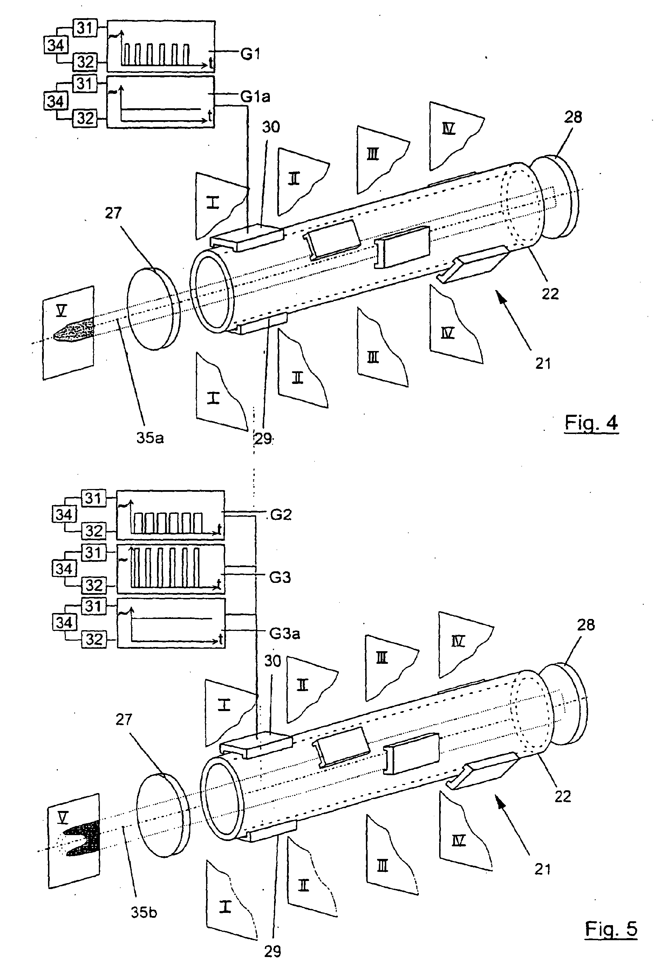

Mit Hilfe der Steuereinheit 14 lässt sich die über die Elektroden 9, 10 an den Laserrohren 2, 3, 4, 5 in das Lasergas eingekoppelte Anregungsleistung ihrer Größe nach beeinflussen. Zu diesem Zweck kann mittels der Steuereinheit 14 die Amplitude der durch den HF-Generator 12 erzeugten HF-Spannung verändert werden. Ergänzend oder alternativ lässt sich durch entsprechende Ansteuerung der Schalteinrichtung 11 mittels der Steuereinheit 14 die Tastfrequenz und/oder das Tastverhältnis der pulsierenden Anregung des Lasergases einstellen. Von der eingestellten Tastfrequenz bzw. dem eingestellten Tastverhältnis ist die Größe der an den Elektroden 9, 10 in das Lasergas eingekoppelten Anregungsleistung ebenfalls abhängig. Die Größe der in das Lasergas eingekoppelten Anregungsleistung wiederum beeinflusst das Laserlicht-Verstärkungsprofil im Innern der Laserrohre 2, 3, 4, 5 und somit den sich ergebenden Mode. Im einzelnen werden diese Zusammenhänge nachstehend zu den Figuren 4 bis 7 beschrieben werden.

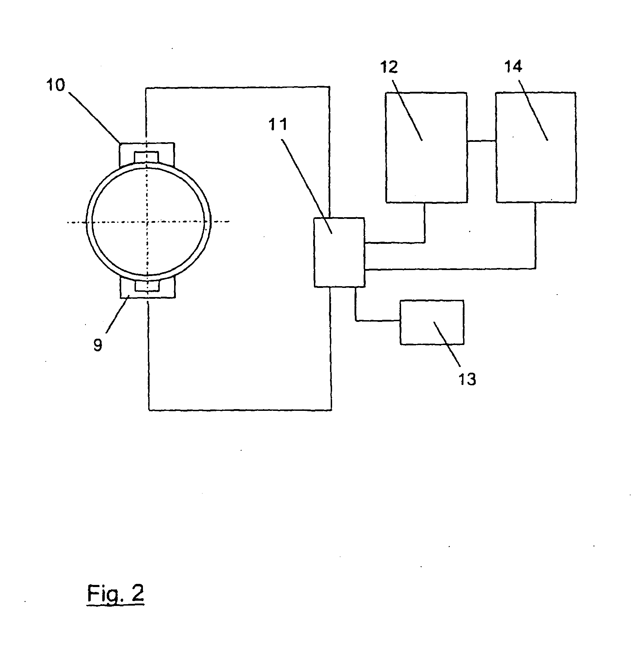

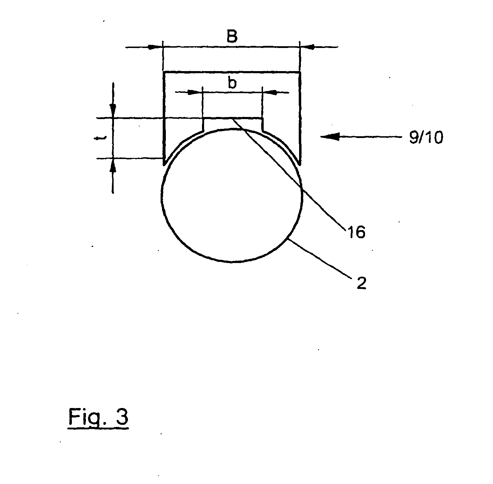

Wie Figur 2 zeigt, sind die Elektroden 9, 10 identisch ausgebildet. Gemäß Figur 3 besitzt jede der Elektroden 9, 10 an ihrer dem betreffenden Laserrohr zugewandten Seite einen Rücksprung 16 mit einer Breite b und einer Tiefe t. Die Breite der Elektroden 9, 10 insgesamt ist in Figur 3 mit "B" bezeichnet. Zweckmäßigerweise sind die Abmessungen an den Elektroden 9, 10 derart gewählt dass sich ein Verhältnis B:b größer als 1,5 und ein Verhältnis t:b größer als 0,2 ergibt.

Ein Laser 21, wie er in den Figuren 4 und 5 ausschnittweise dargestellt ist, stimmt hinsichtlich seiner Funktionsweise, insbesondere hinsichtlich der Art und Weise der Mode-Modulation, mit dem Laser 1 der Figuren 1 bis 3 überein. Ein Laserrohr 22 dient im Falle des Lasers 21 als Gehäuse für das verwendete CO₂-Lasergas. Vier identische Elektrodenpaare 29, 30 der in den Figuren 2 und 3 gezeigten Bauart sind entlang der Achse des Laserrohres 22 einander benachbart auf letzterem angeordnet und dabei um jeweils 45° um die Achse des Laserrohres 22 gegeneinander verdreht. Vorgesehen sind weiterhin ein Auskoppelspiegel 27 sowie ein Rückspiegel 28. Ein Laserstrahl 35a, 35b wird im Innern des Laserrohres 22 erzeugt, wobei sich bei den Betriebszuständen des Lasers 21 gemäß Figur 4 ein Gauß-Mode, bei den Betriebszuständen des Lasers 21 gemäß Figur 5 ein Ringmode ergibt. Die Verschiedenheit der sich einstellenden Moden erklärt sich wie folgt:

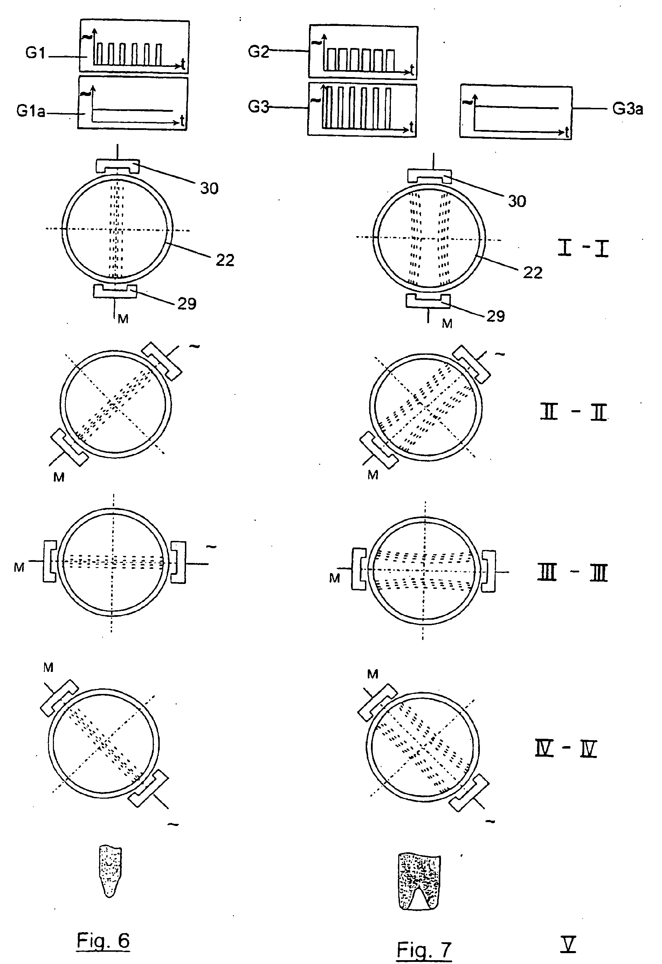

Gemäß Figur 4 wird der Laser 21 zum einen mit pulsierender Anregung, zum andern im Dauerstrich- oder cw-Betrieb eingesetzt. Tastfrequenz und Tastverhältnis bei pulsierender Anregung des Lasers 21 sind durch den Graphen G1 veranschaulicht. G1 zeigt die an den Elektroden 29, 30 bei pulsierender Anregung in das Lasergas im Innern des Laserrohres 22 eingekoppelte Anregungsleistung über der Zeit t. Entsprechend zeigt der Graph G1a den zeitabhängigen Verlauf der an den Elektroden 29, 30 bei Dauerstrich- oder cw-Betrieb des Lasers 21 in das Lasergas eingekoppelten Anregungsleistung. Bei beiden Betriebszuständen des Lasers 21 bilden sich im Innern des Laserrohres 22 in den Querschnitten I-I, II-II, III-III und IV-IV Entladungsstrecken, die ihrerseits Figur 6 entnommen werden können. Die jeweiligen Entladungsstrecken definieren das Laserlicht-Verstärkungsprofil in den einzelnen Querschnitten des Laserrohres 22. Die über die Länge des Laserrohres 22 "aufsummierten" querschnittsbezogenen Verstärkungsprofile bestimmen wiederum die Verteilung der Intensität des Laserlichtes über den Querschnitt des unfokussierten Laserstrahls 35a, d.h. den Mode des Lasers 21 in den Betriebszuständen gemäß Figur 4. Der resultierende Mode, nämlich ein Gauß-Mode, ist in den Teilbildern V der Figuren 4 und 6 dargestellt.

Wird nun ausgehend von den Betriebszuständen des Lasers 21 gemäß Figur 4 die über die Elektroden 29, 30 in das Lasergas im Innern des Laserrohres 22 eingekoppelte Anregungsleistung - wie durch die Graphen G2, G3 und G3a von Figur 5 veranschaulicht - erhöht, so ergibt sich eine Modeänderung. Gemäß G2 hat sich gegenüber den durch G1 veranschaulichten Verhältnissen nach Figur 4 das Tastverhältnis im Sinne einer Erhöhung der eingekoppelten Anregungsleistung geändert. G3 zeigt einen Betriebszustand des Lasers 21 bei pulsierender Anregung, in welchem die Amplitude der an die Elektroden 29, 30 angelegten HF-Spannung gegenüber dem Betriebszustand gemäß G1 von Figur 4 erhöht ist. G3a betrifft ebenso wie G1a nach Figur 6 einen Fall des Dauerstrich- oder cw-Betriebs des Lasers 21. Gegenüber den durch G1a veranschaulichten Verhältnissen ist die in dem Betriebszustand des Lasers 21 gemäß G3a in das Lasergas eingekoppelte Anregungsleistung erhöht. Bewirkt wurde sowohl die veränderte Tastfrequenz gemäß G2 als auch die Erhöhung der HF-Spannungsamplitude gemäß G3 und die Erhöhung der eingekoppelten Anregungsleistung gemäß G3a mittels einer der Steuereinheit 14 gemäß Figur 1 entsprechenden Steuereinheit 34 des Lasers 21. Zur Beeinflussung des Tastverhältnisses wurde mittels der Steuereinheit 34 eine der Schalteinrichtung 11 gemäß Figur 1 entsprechende Schalteinrichtung 31 des Lasers 21, zur Veränderung der HF-Spannungsamplitude sowie zur Erhöhung der eingekoppelten Anregungsleistung bei Dauerstrich- oder cw-Betrieb ein dem HF-Generator 12 gemäß Figur 1 entsprechender HF-Generator 32 des Lasers 21 in geeigneter Weise angesteuert.

Wie sich die Verstärkungsprofile in den einzelnen Querschnittsebenen des Laserrohres 22 aufgrund der vorgenommenen Änderung des Tastverhältnisses bzw. aufgrund der Änderung der HF-Spannungsamplitude oder der Erhöhung der eingekoppelten Anregungsleistung bei Dauerstrich- oder cw-Betrieb entwickelt haben, zeigt Figur 7 im Vergleich mit Figur 6. In den Teilbildern V der Figuren 5 und 7 ist wiederum der resultierende Mode dargestellt.

Demnach hat jede der vorstehend beschriebenen Maßnahmen durch Erhöhung der in das Lasergas im Innern des Laserrohres 22 eingekoppelten Anregungsleistung dazu geführt, dass sich der Mode des Lasers 21 von einem Gauß-Mode (Figuren 4, 6) in einen Ringmode (Figuren 5, 7) geändert hat. Bei pulsierender Anregung des Lasers 21 kann mittels der Steuereinheit 34 beispielsweise das Tastverhältnis bei gleichbleibender Tastfrequenz verändert werden. Alternativ lassen sich bei pulsierender Anregung Tastfrequenz und Tastverhältnis auch gemeinschaftlich variieren.

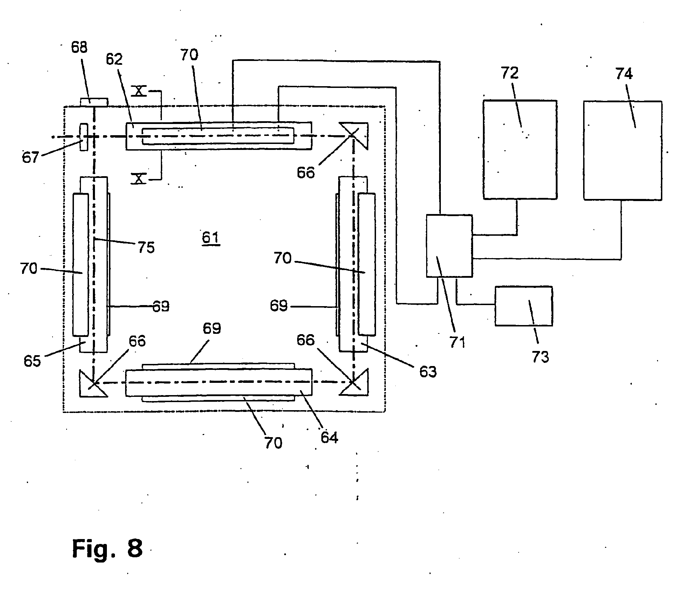

Ein Laser 61 ist in Fig. 8 dargestellt. Wie im Falle des Lasers 1 gemäß Figur 1 sind dabei Laserrohre 62, 63, 64, 65 in Propagationsrichtung eines strichpunktiert angedeuteten Laserstrahls 75 hintereinanderliegend angeordnet. Zwischen den Laserrohren 62, 63, 64, 65 wird der Laserstrahl 75 mittels Umlenkspiegeln 66 umgelenkt. Vor dem Laserrohr 62 befindet sich ein Auskoppelspiegel 67; hinter dem Laserrohr 65 ist ein Rückspiegel 68 angeordnet. Jeweils ein Elektrodenpaar mit Elektroden 69, 70 sitzt auf den Laserrohren 62, 63, 64, 65 außen auf. Dabei sind die Elektrodenpaare benachbarter Laserrohre 62, 63, 64, 65 jeweils um 45° um die Laserrohrachse gegeneinander verdreht. Über eine Schalteinrichtung 71 sind die Elektroden 69, 70 der einzelnen Elektrodenpaare an einen HF-Generator 72 angeschlossen und außerdem mit einem Massepotential 73 verbunden. Zur Ansteuerung der Schalteinrichtung 71 und somit zur Steuerung des Lasers 61 dient eine Steuereinheit 74. Mittels dieser lassen sich Tastfrequenz und Tastverhältnis der pulsierenden Anregung des Lasers 61 variieren. Die Frequenz der mittels des HF-Generators 72 erzeugten Wechselspannung liegt ebenfalls im Bereich von 1 MHz bis 100 MHz.

Von den vorstehend beschriebenen Laserbauarten unterscheidet sich der Laser 61 durch die Art und Weise der Modeeinstellung. Wesentliche Parameter für die Modeeinstellung im Falle des Lasers 61 sind die Tastfrequenz der pulsierenden Laseranregung sowie die Form der einander zugewandten Flächen an den Elektroden 69, 70 der einzelnen, auf den Laserrohren 62, 63, 64, 65 angeordneten Elektrodenpaare.

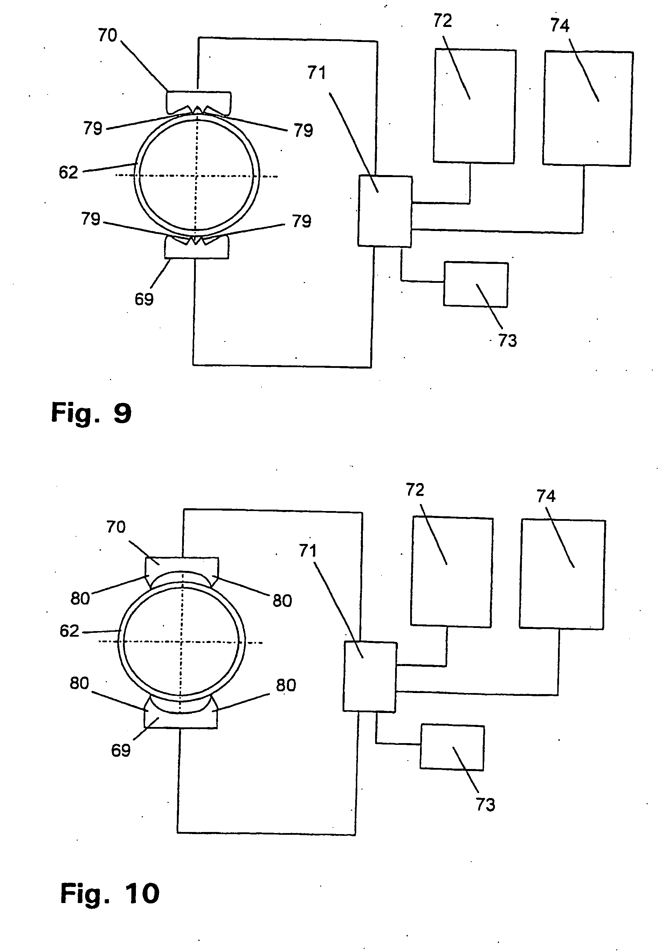

Fig. 9 zeigt eine erste, Figur 10 eine zweite Bauart der Elektroden 69, 70, jeweils an dem Laserrohr 62 des Lasers 61.

In beiden Fällen sind die einander zugewandten Elektrodenflächen gleich gestaltet. Gemäß Figur 9 folgen die genannten Flächen im wesentlichen der Außenkontur des Laserrohres 62 mit einem kleinen Abstand. Im zentralen Bereich besitzen die Flächen jeweils zwei Spitzen 79, die auf dem Laserrohr 62 aufliegen. Die Entladung des CO₂-Lasergases im Innern des Laserrohres 62 beginnt beim Einschalten der Spannung folglich von den Spitzen 79 aus zu zünden. Bei hohen Tastfrequenzen, etwa bei Tastfrequenzen in der Größenordnung von 100 kHz, ergibt sich daher ein mittenbetontes Verstärkungsprofil. Wird die Tastfrequenz auf verhältnismäßig niedrige Werte eingestellt, z.B. auf Werte in der Größenordnung von 1 kHz, so stellt sich auch außerhalb des genannten Mittenbereichs der Elektroden 69, 70 eine nennenswerte Entladung ein.

Da die Elektroden 69, 70 der Elektrodenpaare an den einzelnen Laserrohren 62, 63, 64, 65 gegeneinander verdreht sind, überlagern sich die im Bereich der einzelnen Elektroden ausgebildeten Verstärkungsprofile und es ergibt sich ein sehr ausgeprägter Gauß-Mode.

Die in Figur 10 gezeigten Elektroden 69, 70 besitzen eine im wesentlichen U-förmige Außenkontur und liegen in ihren Randbereichen mit Schenkeln 80 auf dem zugeordneten Laserrohr, im gezeigten Beispielsfall auf dem Laserrohr 62, auf. Folglich beginnt beim Einschalten der Spannung die Entladung von den Randbereichen der Elektroden 69, 70 aus zu zünden. Bei hohen Tastfrequenzen, z.B. bei Tastfrequenzen in der Größenordnung von 100 kHz, ergibt sich unter diesen Umständen ein randbetontes Verstärkungsprofil. Bei Absenken der Tastfrequenz auf niedrige Werte, z.B. auf Werte in der Größenordnung von 1 kHz, stellt sich auch im Mittenbereich, also im Bereich der Achse des Laserrohres 62, eine nennenswerte Entladung ein. Infolge der gegenseitigen Verdrehung der Elektrodenpaare an den einzelnen Laserrohren 62, 63, 64, 65 relativ zueinander überlagern sich die im Bereich der einzelnen Elektrodenpaare ausgebildeten Verstärkungsprofile zu einem in Abhängigkeit von der gewählten Tastfrequenz mehr oder weniger ausgeprägten Ringmode.

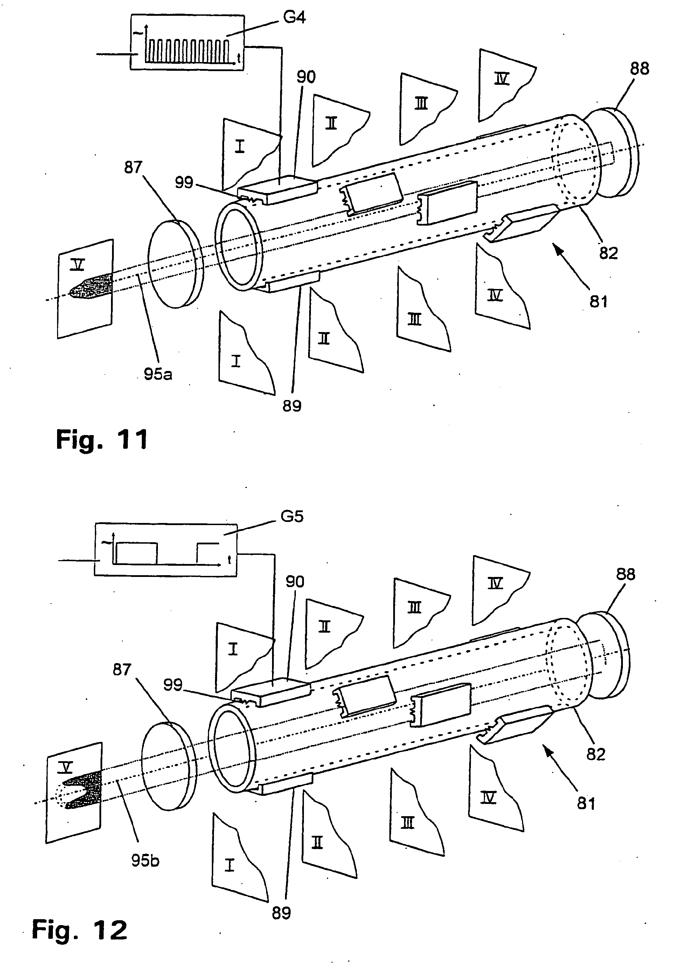

Eine nähere Erläuterung der Zusammenhänge folgt nachstehend in Verbindung mit den Figuren 11 bis 14.

Ein dort dargestellter Laser 81 umfasst ein Laserrohr 82, dem benachbart ein Auskoppelspiegel 87 sowie ein Rückspiegel 88 angeordnet sind. Auf dem Laserrohr 82 sitzen insgesamt vier Elektrodenpaare jeweils mit Elektroden 89, 90. In ihrer Bauart stimmen die Elektroden 89, 90 im Prinzip mit den Elektroden 69, 70 gemäß Fig. 9 überein. Dementsprechend sind die Elektroden 89, 90 an ihren einander zugewandten Elektrodenflächen mit im mittleren Bereich dieser Flächen angeordneten Spitzen 99 versehen. Jede der Elektroden 89, 90 erstreckt sich nur über einen Bruchteil der Länge des Laserrohres 82. Jedes der Elektrodenpaare ist gegenüber dem ihm in Längsrichtung des Laserrohres 82 benachbarten Elektrodenpaar um 45° um die Laserrohrachse gedreht. Im Innern des Laserrohres 82 erzeugt wird ein Laserstrahl 95a, 95b.

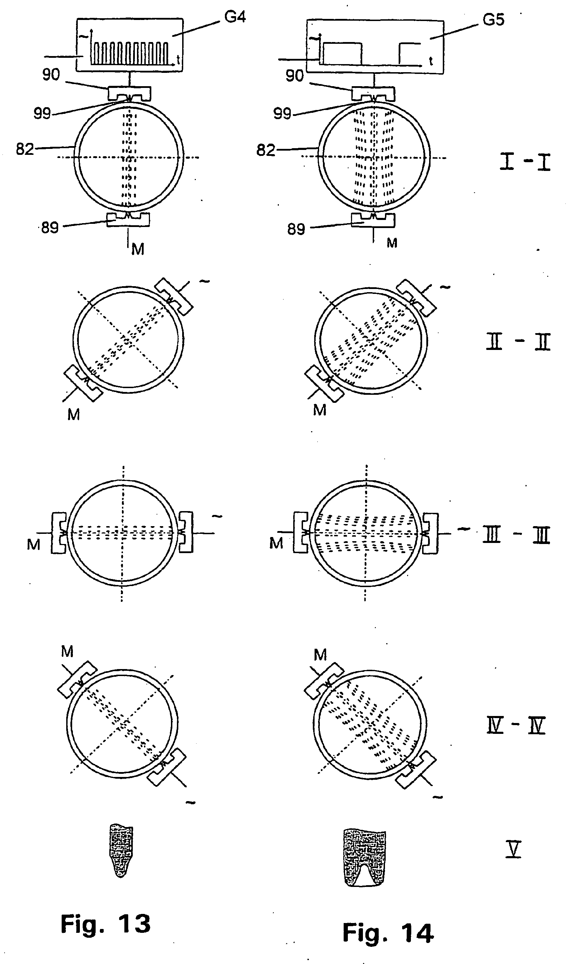

Die Figuren 11 und 13 einerseits sowie die Figuren 12 und 14 andererseits zeigen die Verhältnisse an dem Laser 81 bei unterschiedlichen Betriebszuständen. Gekennzeichnet werden die Betriebszustände des Lasers 81 durch die jeweils eingestellte Tastfrequenz bzw. das jeweils eingestellte Tastverhältnis. Die den veranschaulichten Betriebszuständen des Lasers 81 zugeordneten Tastfrequenzen bzw.- verhältnisse sind in den Graphen G4 und G5 der Figuren 11 bis 14 dargestellt.

Die Figuren 13 und 14 zeigen in ihren oberen vier Teilbildern I-I, II-II, III-III, IV-IV jeweils die sich aufgrund der eingestellten Tastfrequenzen und Tastverhältnisse in den Querschnitten I-I bis IV-IV des Laserrohres 82 gemäß den Figuren 11 und 12 ergebenden Entladungsstrecken.

Wie vorstehend bereits ausgeführt, bestimmen die jeweiligen Entladungsstrecken das Verstärkungsprofil in dem betreffenden Querschnitt. Die über die Länge des Laserrohres 82 "aufsummierten" Verstärkungsprofile definieren wiederum die Verteilung der Intensität des Laserlichtes über den Querschnitt des an dem Auskoppelspiegel 87 ausgekoppelten Laserstrahls 95a, 95b. Der jeweils resultierende Mode ist in den Teilbildern V der Figuren 11 bis 14 dargestellt.

Bei hohen Tastfrequenzen (Figuren 11, 13) ist die Entladung mittenbetont, bei niedrigen Tastfrequenzen (Figuren 12, 14) stark randbetont. In dem letztgenannten Fall wird die Entladung durch die im Vergleich zu den Spitzen 99 breiten Schenkel der Elektroden 89, 90 bestimmt. Bezüglich der genauen Ausbildung und der Lage der einzelnen Entladungsstrecken sowie der resultierenden Verteilung der Intensität des Laserlichtes über den Querschnitt des Laserstrahls 95a, 95b wird ausdrücklich auf die einzelnen Teilbilder der Figuren 13 und 14 verwiesen. Bei dem Betriebszustand gemäß den Figuren 11 und 13 ergibt sich demnach ein Gauß-Mode, bei dem Betriebszustand gemäß den Figuren 12 und 14 ein Ringmode. Die Einstellung der Tastfrequenz und/oder des Tastverhältnisses an dem Laser 81 erfolgt mittels einer Schalteinrichtung sowie einer damit verbundenen Steuereinheit der vorstehend beschriebenen Art.

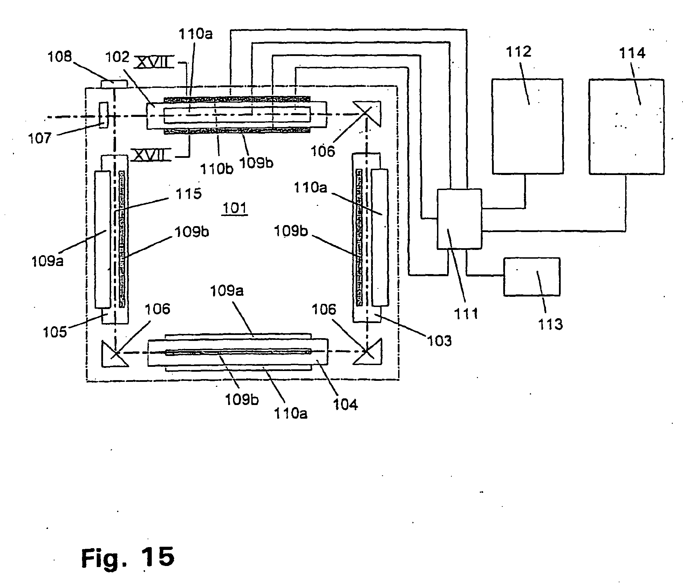

Ausweislich Figur 15 umfasst ein Laser 101 vier aus Quarz bestehende Laserrohre 102, 103, 104, 105, in denen sich Lasergas befindet, das insbesondere CO₂ oder CO enthält. Zwischen den Laserrohren 102, 103, 104, 105 befinden sich Umlenkspiegel 106, die einen erzeugten Laserstrahl 115 aus dem einen Laserrohr in das in Propagationsrichtung jeweils nächste Laserrohr umlenken. Vor dem Laserrohr 102 befindet sich ein Auskoppelspiegel 107; hinter dem Laserrohr 105 ist ein Rückspiegel 108 angeordnet.

Auf jedem der Laserrohre 102, 103, 104, 105 sitzen zwei unterschiedliche Elektrodenpaare, nämlich Elektroden 109a, 110a; 109b, 110b, die sich nahezu über die ganze Länge des jeweiligen Laserrohres 102, 103, 104, 105 erstrecken. Die Elektroden 109a, 110a; 109b, 110b der beiden Elektrodenpaare an ein und demselben Laserrohr 102, 103, 104, 105 sind um 90° gegeneinander versetzt. Weiterhin sind die Elektrodenpaare 109a, 110a; 109b, 110b eines Laserrohres 102, 103, 104, 105 gegenüber den entsprechenden Elektrodenpaaren des oder der benachbarten Laserrohre 102, 103, 104, 105 um 45° um die Laserrohrachse gedreht.

Sämtliche Elektroden 109a, 110a; 109b, 110b auf den Laserrohren 102, 103, 104, 105 sind über eine Schalteinrichtung 111 mit einem HF-Generator 112 bzw. mit Massepotential 113 verbunden. Zur Steuerung der Schalteinrichtung 111 dient eine Steuereinheit 114.

Die Steuereinheit 114 kann die Schalteinrichtung 111 derart steuern, dass entweder an den Elektroden 109a, 110a oder an den Elektroden 109b, 110b oder an sämtlichen Elektroden 109a, 110a; 109b, 110b eine Spannung anliegt. Außerdem besteht steuerungstechnisch beispielsweise die Möglichkeit, dass an einem der Laserrohre 102, 103, 104, 105 die Elektroden 109a, 110a, an einem anderen der Laserrohre 102, 103, 104, 105 die Elektroden 109b, 110b und an einem weiteren der Laserrohre 102, 103, 104, 105 die Elektroden 109a, 110a, 109b, 110b aktiviert sind. Alle denkbaren Kombinationen aktivierter Elektroden sind mittels der Steuereinheit 114 realisierbar.

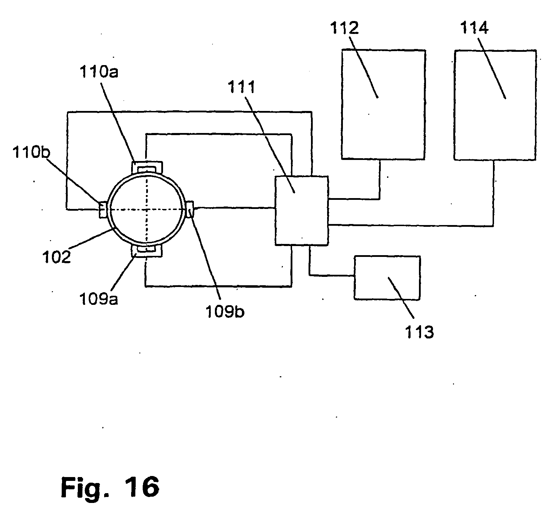

Gemäß Figur 16 sind die Elektroden 109a, 110a; 109b, 110b ein und desselben Elektrodenpaares jeweils gleich ausgebildet.

Die Elektroden 109b, 110b besitzen eine ebene, dem jeweiligen Laserrohr 102, 103, 104, 105 zugewandte Fläche und sind vergleichsweise schmal. Damit bildet sich, sobald die Elektroden 109b, 110b aktiviert sind, eine Entladungsstrecke von der Mitte der einen zu der Mitte der gegenüberliegenden Elektrode 109b, 110b aus. In der Folge ergibt sich ein mittenbetontes Verstärkungsprofil.

Die Elektroden 109a, 110a besitzen eine U-förmige Querschnittsform und sind vergleichsweise breit, wobei die U-Schenkel an dem jeweiligen Laserrohr 102, 103, 104, 105 anliegen. Folglich bilden sich Entladungsstrecken zunächst von den beiden U-Schenkeln der einen zu den entsprechenden U-Schenkeln der anderen Elektrode 109a, 110a aus. Dies bedeutet, dass die Dichte der laseraktiven Teilchen auf dem kürzesten Weg zwischen den U-Schenkeln der Elektroden 109a, 110a größer ist als im Zentrum des jeweiligen Laserrohres 102, 103, 104, 105.

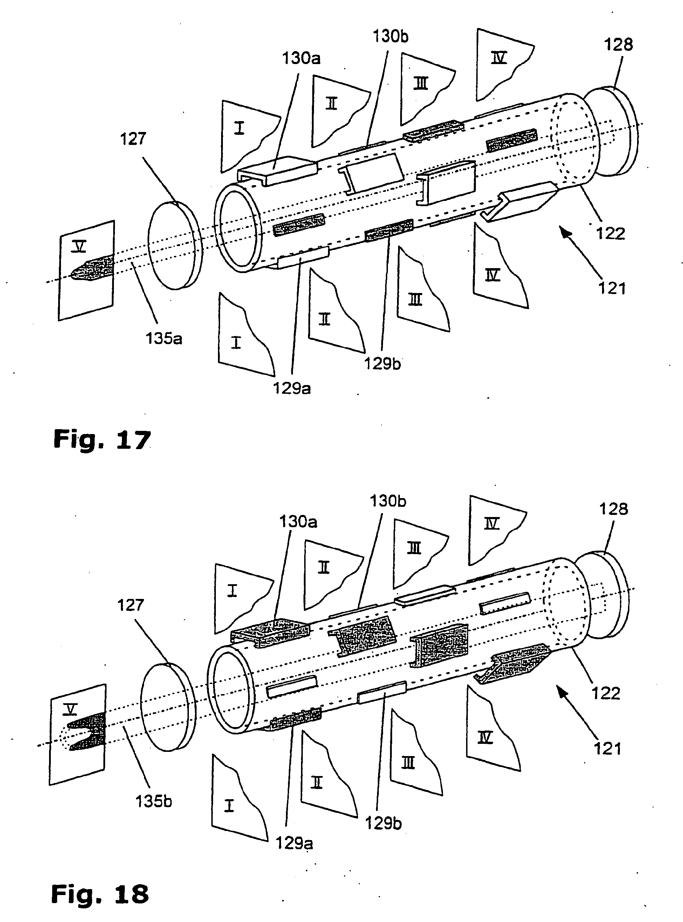

Eine nähere Erläuterung der Zusammenhänge folgt in Verbindung mit den Figuren 17 bis 20.

Die letztgenannten Abbildungen zeigen einen Laser 121 mit einem Laserrohr 122, dem benachbart ein Auskoppelspiegel 127 sowie ein Rückspiegel 128 angeordnet sind. Auf dem Laserrohr 122 sitzen in vier Querschnittsebenen I-I, II-II, III-III, IV-IV je zwei Elektrodenpaare mit Elektroden 129a, 130a; 129b, 130b, die in ihrem Aufbau den Elektroden 109a, 110a; 109b, 110b gemäß Figur 16 entsprechen. Im Innern des Laserrohres 122 wird ein Laserstrahl 135a, 135b erzeugt. Jede der Elektroden 129a, 130a; 129b, 130b erstreckt sich lediglich über einen Bruchteil der Länge des Laserrohres 122. Die längs des Laserrohres 122 aufeinanderfolgenden, jeweils zwei Elektrodenpaare 129a, 130a; 129b; 130b umfassenden Elektrodenkonfigurationen sind relativ zueinander um 45° um die Laserrohrachse gedreht. In den Figuren 17 und 18 sind die aktivierten Elektroden, also diejenigen Elektroden, an die über eine der Schalteinrichtung 111 gemäß den Figuren 15 und 16 entsprechende Schalteinrichtung eine von einem zugehörigen HF-Generator erzeugte HF-Spannung angelegt ist, schwarz ausgefüllt dargestellt, die nicht aktivierten Elektroden sind lediglich mit ihren Umrissen wiedergegeben. Die Steuerung der Schalteinrichtung im Sinne eines Ein- oder Ausschaltens der oder einzelner Elektroden erfolgt über eine Steuereinheit der vorstehend bereits mehrfach beschriebenen Art.

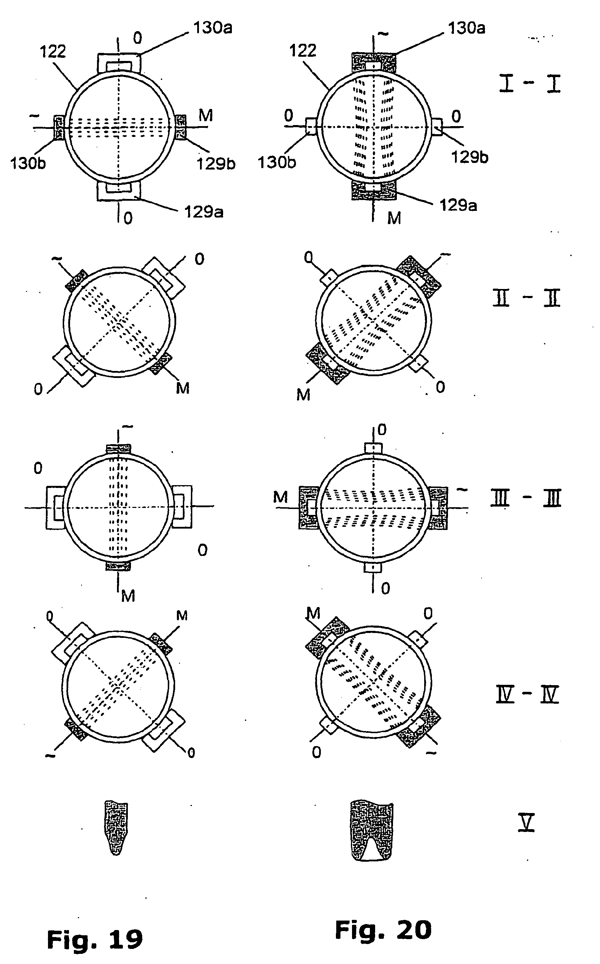

Figur 19 zeigt in den oberen vier Teilbildern I-I bis IV-IV die sich bei Aktivierung der Elektroden 129b, 130b gemäß Figur 17 ergebenden Entladungsstrecken in den Querschnitten I-I bis IV-IV gemäß Figur 17. Entsprechend zeigt Figur 20 die Ausbildung der Entladungsstrecken in den Querschnitten I-I bis IV-IV gemäß Figur 18, wobei in dem letztgenannten Fall die Elektroden 129a, 130a aktiviert sind.

Die Entladungsstrecken bestimmen - wie bereits ausgeführt - die Verstärkungsprofile in den jeweiligen Querschnitten. Die über die Länge des Laserrohres 122 "aufsummierten" Verstärkungsprofile definieren wiederum die Verteilung der Intensität des Laserlichtes über den Querschnitt des aus dem Auskoppelspiegel 127 ausgekoppelten unfokussierten Laserstrahls 135a, 135b. Die resultierenden Moden sind in den Teilbildern V der Figuren 17 bis 20 dargestellt.

Bezüglich der Ausbildung und der Lage der einzelnen Entladungsstrecken sowie hinsichtlich der resultierenden Moden wird ausdrücklich auf die einzelnen Teildarstellungen der Figuren 19 und 20 verwiesen. Bei den Verhältnissen gemäß den Figuren 17 und 19 ergibt sich demnach ein Gauß-Mode, bei den Verhältnissen gemäß den Figuren 18 und 20 ein Ringmode.

Vorstehend ist die Erfindung ohne Beschränkung der allgemeinen Anwendbarkeit beschrieben worden.

So ist die Erfindung nicht auf Laser mit einem oder mehreren Laserrohren mit rundem Querschnitt beschränkt; vielmehr können auch Gehäuse bzw. Laserrohre mit einem mehreckigen Querschnitt, wie beispielsweise einem rechteckigen, insbesondere einem quadratischen Querschnitt eingesetzt werden. Auch hinsichtlich Anordnung und Ausbildung der Elektroden sind die verschiedensten Ausführungsformen denkbar. Beispielsweise können die Elektroden außerhalb oder innerhalb des Laserrohres angeordnet oder Bestandteil des Laserrohres sein.

Besonders zweckmäßig ist die Realisierung der Erfindung im Falle von Lasern, deren Elektroden vergleichsweise weit voneinander beabstandet sind. Im Falle eines derartigen, in der Regel strömungsgekühlten Lasers kann das Verstärkungsprofil im Innern des jeweiligen Gehäuses bzw. Laserrohres besonders effektiv durch die erfindungsgemäßen Maßnahmen beeinflusst werden.

## Patentansprüche

1. Laser mit einem Gehäuse, wie wenigstens einem Laserrohr (2, 3, 4, 5; 22; 62, 63, 64, 65; 82; 102, 103, 104, 105; 122), für ein Lasergas oder ein Gemisch von Lasergasen, mit einer Elektrodenanordnung, die wenigstens zwei einander gegenüberliegende Elektroden (9, 10; 29, 30; 69, 70; 89, 90; 109a, 110a, 109b, 110b; 129a, 130a, 129b, 130b) umfasst, und mit einer Spannungs-Versorgungseinheit (12; 72; 112), mittels der an Elektroden der Elektrodenanordnung eine hochfrequente Wechselspannung, im Folgenden als HF-Spannung bezeichnet, anlegbar ist, so dass sich in dem Lasergas oder Lasergasgemisch ein Entladungsbereich ausbildet, in welchem das Lasergas oder Lasergasgemisch angeregt wird, wobei die Spannungs-Versorgungseinheit (12; 72; 112) derart gestaltet ist, dass die an zwei einander gegenüberliegenden Elektroden (9, 10; 29, 30; 69, 70; 89, 90; 109a, 110a, 109b, 110b; 129a, 130a, 129b, 130b) angelegte HF-Spannung pulsierend ist, sowie mit einer Steuereinheit (14; 34; 74; 114) zur Variation des Tastverhältnisses und/oder der Tastfrequenz der an die Elektroden angelegten HF-Spannung,
**dadurch gekennzeichnet,**
**dass** die Form der einander zugewandten Elektrodenflächen derart gestaltet ist, dass durch die Wahl von unterschiedlichen Tastfrequenzen und/oder Tastverhältnissen gezielt unterschiedliche Formen von Entladungskanälen und damit gezielt unterschiedliche Verteilungen der Intensität des Laserlichtes über den Laserstrahlquerschnitt, im Folgenden als Mode bezeichnet, einstellbar sind.

2. Laser nach Anspruch 1, **dadurch gekennzeichnet, dass** zur Veränderung der über die Elektroden (9, 10; 29, 30; 69, 70; 89, 90; 109a, 110a, 109b, 110b; 129a, 130a, 129b, 130b) der Elektrodenanordnung in das Lasergas oder Lasergasgemisch eingekoppelten Anregungsleistung die Amplitude der an die Elektroden der Elektrodenanordnung angelegten HF-Spannung veränderbar ist.

3. Laser nach Anspruch 1 oder 2, **dadurch gekennzeichnet, dass** die in das Lasergas oder Lasergasgemisch eingekoppelte Anregungsleistung zwischen 0 und mehr als 8 kW variierbar ist.

4. Laser nach einem der vorhergehenden Ansprüche, **dadurch gekennzeichnet, dass** mehrere feste Werte oder Bereiche für die in das Lasergas oder Lasergasgemisch eingekoppelte Anregungsleistung einstellbar sind.

5. Laser nach einem der vorhergehenden Ansprüche, **dadurch gekennzeichnet, dass** wenigstens ein fester Wert oder Bereich für die in das Lasergas oder Lasergasgemisch eingekoppelte Anregungsleistung oberhalb 2 kW liegt.

6. Laser nach einem der vorhergehenden Ansprüche, **dadurch gekennzeichnet, dass** durch die Variation der in das Lasergas oder Lasergasgemisch eingekoppelten Anregungsleistung der Mode kontinuierlich einstellbar ist.

7. Laser nach einem der vorhergehenden Ansprüche, **dadurch gekennzeichnet, dass** der Verlauf der dem Lasergas oder Lasergasgemisch zugewandten Elektrodenflächen der Elektroden (9, 10; 69, 70) im Wesentlichen dem Verlauf der Oberfläche des Laserrohres (2, 3, 4, 5; 62, 63, 64, 65) für das Lasergas oder das Lasergasgemisch folgt.

8. Laser nach einem der vorhergehenden Ansprüche, **dadurch gekennzeichnet, dass** die Elektrodenflächen der Elektroden (9, 10) wenigstens einen Rücksprung (16), wie eine Nut, aufweisen, wobei der wenigstens eine Rücksprung (16) im zentralen Bereich der Elektrodenfläche vorgesehen ist.

9. Laser nach Anspruch 8, **dadurch gekennzeichnet, dass** das Verhältnis der Breite (B) der Elektrode (9, 10) zu der Breite (b) des Rücksprungs (16) größer als 1,5 ist.

10. Laser nach einem der Ansprüche 8 bis 9, **dadurch gekennzeichnet, dass** das Verhältnis der Tiefe (t) des Rücksprungs (16) zu der Breite (b) des Rücksprungs (16) größer als 0,2 ist.

11. Laser nach einem der Ansprüche 1 bis 7, **dadurch gekennzeichnet, dass** die Elektrodenflächen der Elektroden (69, 70) Schenkel (80) aufweisen, wobei die Schenkel (80) im äußeren Bereich der Elektrodenfläche vorgesehen sind.

12. Laser nach einem der Ansprüche 1 bis 6, **dadurch gekennzeichnet, dass** die Elektroden (29, 30; 89, 90; 109a, 110a; 129a, 130a) eine im Wesentlichen U-förmige Querschnittsform mit Schenkeln im äußeren Bereich der dem Lasergas oder Lasergasgemisch zugewandten Elektrodenfläche aufweisen.

13. Laser nach einem der Ansprüche 8 bis 12, **dadurch gekennzeichnet, dass** sich bei hohen Tastfrequenzen ein randbetontes Verstärkungsprofil und bei niedrigen Tastfrequenzen ein mittenbetontes Verstärkungsprofil ergibt und damit gezielt unterschiedliche Moden einstellbar sind.

14. Laser nach einem der Ansprüche 1 bis 7 oder 12, **dadurch gekennzeichnet, dass** die Elektrodenflächen der Elektroden (69, 70; 89, 90) wenigstens eine Erhebung (79; 99), wie eine Spitze oder Kante, aufweisen, wobei die wenigstens eine Erhebung (79; 99) im zentralen Bereich der Elektrodenfläche vorgesehen ist.

15. Laser nach Anspruch 14, **dadurch gekennzeichnet, dass** die Erhebung (79; 99) durch eine Dachkantausbildung der Elektrodenfläche gebildet ist.

16. Laser nach einem der Ansprüche 14 bis 15, **dadurch gekennzeichnet, dass** sich bei hohen Tastfrequenzen ein mittenbetontes Verstärkungsprofil und bei niedrigen Tastfrequenzen ein randbetontes Verstärkungsprofil ergibt und damit gezielt unterschiedliche Moden einstellbar sind.

17. Laser nach einem der vorhergehenden Ansprüche, **dadurch gekennzeichnet, dass** die Tastfrequenz zwischen 0 und mehr als 100 kHz variierbar ist.

18. Laser nach einem der vorhergehenden Ansprüche, **dadurch gekennzeichnet, dass** mehrere feste Tastfrequenzen einstellbar sind.

19. Laser nach einem der vorhergehenden Ansprüche, **dadurch gekennzeichnet, dass** wenigstens eine Tastfrequenz größer als 10 kHz ist.

20. Laser nach einem der vorhergehenden Ansprüche, **dadurch gekennzeichnet, dass** eine Tastfrequenz größer als 50 kHz, bevorzugt größer als 80 kHz ist.

21. Laser nach einem der vorhergehenden Ansprüche, **dadurch gekennzeichnet, dass** durch die Variation der Tastfrequenz und/oder des Tastverhältnisses der Mode kontinuierlich einstellbar ist.

22. Laser nach einem der vorhergehenden Ansprüche, **dadurch gekennzeichnet, dass** mehr als zwei Elektroden (9, 10; 29, 30; 69, 70; 89, 90; 109a, 110a, 109b, 110b; 129a, 130a, 129b, 130b) vorgesehen sind.

23. Laser nach einem der vorhergehenden Ansprüche, **dadurch gekennzeichnet, dass** wenigstens ein Teil der Elektroden dem Lasergas oder Lasergasgemisch zugewandte Flächen aufweist, die mehrere unterschiedlich gestaltete Bereiche besitzen.

24. Laser nach einem der vorhergehenden Ansprüche, **dadurch gekennzeichnet, dass** die Elektroden (9, 10; 29, 30; 69, 70; 89, 90; 109a, 110a, 109b, 110b; 129a, 130a, 129b, 130b) der Elektrodenanordnung in Umfangsrichtung des Laserstrahls versetzt angeordnet sind und/oder eine unterschiedliche Krümmung und/oder eine unterschiedliche azimutale Erstreckung und/oder unterschiedlich gestaltete, dem Lasergas oder Lasergasgemisch zugewandte Flächen besitzen.

25. Laser nach einem der vorhergehenden Ansprüche, **dadurch gekennzeichnet, dass** die Gestaltung der dem Lasergas oder Lasergasgemisch zugewandten Flächen jeweils paarweise einander zugeordneter Elektroden gleich ist.

26. Laser nach einem der vorhergehenden Ansprüche, **dadurch gekennzeichnet, dass** die Elektroden der Elektrodenanordnung zumindest teilweise in Richtung der Laserstrahlachse beabstandet sind.

27. Laser nach einem der vorhergehenden Ansprüche, **dadurch gekennzeichnet, dass** die Elektroden der Elektrodenanordnung zumindest teilweise einen unterschiedlichen Abstand von der Achse des Laserstrahls besitzen.

## Claims

1. Laser, having a housing, such as at least one laser tube (2, 3, 4, 5; 22; 62, 63, 64, 65; 82; 102,103, 104, 105; 122), for a laser gas or a mixture of laser gases, having an electrode arrangement, which comprises at least two oppositely disposed electrodes (9, 10; 29, 30; 69, 70; 89, 90; 109a, 110a, 109b, 110b; 129a, 130a, 129b, 130b), and having a voltage supply unit (12; 72; 112) by means of which a high-frequency alternating voltage, hereafter referred to as the HF voltage, can be provided to electrodes of the electrode arrangement, so that in the laser gas or laser gas mixture there is formed a discharge zone, in which the laser gas or laser gas mixture is excited, the voltage supply unit (12; 72; 112) being configured such that the HF voltage provided to two oppositely disposed electrodes (9, 10; 29, 30; 69, 70; 89, 90; 109a, 110a, 109b, 110b; 129a, 130a, 129b, 130b) is pulsating, and having a control unit (14; 34; 74; 114) for variation of the duty cycle and/or of the scanning frequency of the HF voltage provided to the electrodes, **characterised in that**
the form of the electrode surfaces facing one another is configured so that by choosing different scanning frequencies and/or duty cycles specifically different forms of discharge channels and hence specifically different distributions of the intensity of the laser light over the laser beam cross-section, hereafter referred to as the mode, are adjustable.

2. Laser according to claim 1, **characterised in that** to change the excitation power induced via the electrodes (9, 10; 29, 30; 69, 70; 89, 90; 109a, 110a, 109b, 110b; 129a, 130a, 129b, 130b) of the electrode arrangement in the laser gas or laser gas mixture, the amplitude of the HF voltage provided to the electrodes of the electrode arrangement is alterable.

3. Laser according to claim 1 or 2, **characterised in that** the excitation power induced in the laser gas or laser gas mixture is variable between 0 and more than 8 kW.

4. Laser according to any one of the preceding claims, **characterised in that** a plurality of fixed values or zones for the excitation power induced in the laser gas or laser gas mixture can be set.

5. Laser according to any one of the preceding claims, **characterised in that** at least one fixed value or zone for the excitation power induced in the laser gas or laser gas mixture lies above 2 kW.

6. Laser according to any one of the preceding claims, **characterised in that,** by variation of the excitation power induced in the laser gas or laser gas mixture, the mode is continuously adjustable.

7. Laser according to any one of the preceding claims, **characterised in that** the course of the electrode surfaces of the electrodes (9, 10; 69, 70) facing the laser gas or laser gas mixture substantially follows the course of the surface of the laser tube (2, 3, 4, 5; 62, 63, 64, 65) for the laser gas or the laser gas mixture.

8. Laser according to any one of the preceding claims, **characterised in that** the electrode surfaces of the electrodes (9, 10) have at least one recess (16), such as a groove, the at least one recess (16) being provided in the central region of the electrode surface.

9. Laser according to claim 8, **characterised in that** the ratio of the width (B) of the electrodes (9, 10) to the width (b) of the recess (16) is greater than 1.5.

10. Laser according to one of claims 8 and 9, **characterised in that** the ratio of the depth (t) of the recess (16) to the width (b) of the recess (16) is greater than 0.2.

11. Laser according to any one of claims 1 to 7, **characterised in that** the electrode surfaces of the electrodes (69, 70) have salient portions (80), the salient portions (80) being provided in the outer region of the electrode surface.

12. Laser according to any one of claims 1 to 6, **characterised in that** the electrodes (29, 20; 89, 90; 109a, 110a, 129a, 130a) have a substantially U-shaped cross-sectional shape with salient portions in the outer region of the electrode surface facing the laser gas or laser gas mixture.

13. Laser according to any one of claims 8 to 12, **characterised in that** at high scanning frequencies an edge-accentuated amplification profile occurs and at low scanning frequencies a middle-accentuated amplification profile occurs and thus specifically different modes are settable.

14. Laser according to any one of claims 1 to 7 or 12, **characterised in that** the electrode surfaces of the electrodes (69, 70; 89, 90) have at least one raised portion (79; 99), such as a peak or edge, the at least one raised portion (79; 99) being provided in the central region of the electrode surface.

15. Laser according to claim 14, **characterised in that** the raised portion (79; 99) is formed by a roof-edge formation of the electrode surface.

16. Laser according to one of claims 14 and 15, **characterised in that** at high scanning frequencies a middle-accentuated amplification profile occurs and at low scanning frequencies an edge-accentuated amplification profile occurs and thus specifically different modes are settable.

17. Laser according to any one of the preceding claims, **characterised in that** the scanning frequency is variable between 0 and more than 100 kHz.

18. Laser according to any one of the preceding claims, **characterised in that** a plurality of fixed scanning frequencies can be set.

19. Laser according to any one of the preceding claims, **characterised in that** at least one scanning frequency is greater than 10 kHz.

20. Laser according to any one of the preceding claims, **characterised in that** a scanning frequency is greater than 50 kHz, preferably greater than 80 kHz.

21. Laser according to any one of the preceding claims, **characterised in that** by variation of the scanning frequency and/or of the duty cycle the mode is continuously adjustable.

22. Laser according to any one of the preceding claims, **characterised in that** more than two electrodes (9, 10; 29, 30; 69, 70; 89, 90; 109a, 110a, 109b, 110b; 129a, 130a, 129b, 130b) are provided.

23. Laser according to any one of the preceding claims, **characterised in that** at least a part of the electrodes has surfaces facing towards the laser gas or laser gas mixture, the surfaces having a plurality of differently configured zones.

24. Laser according to any one of the preceding claims, **characterised in that** the electrodes (9, 10; 29, 30; 69, 70; 89, 90; 109a, 110a, 109b, 110b; 129a, 130a, 129b, 130b) of the electrode arrangement are arranged offset in the circumferential direction of the laser beam and/or have a different curvature and/or a different azimuthal extent and/or differently configured surfaces facing the laser gas or laser gas mixture.

25. Laser according to any one of the preceding claims, **characterised in that** the configuration of the surfaces facing the laser gas or laser gas mixture of electrodes each associated with one another in pairs is identical.

26. Laser according to any one of the preceding claims, **characterised in that** the electrodes of the electrode arrangement are spaced at least partially in the direction of the laser beam axis.

27. Laser according to any one of the preceding claims, **characterised in that** the electrodes of the electrode arrangement have at least partially a different spacing from the axis of the laser beam.

## Revendications

1. Laser avec un boîtier, comme au moins un tube laser (2, 3, 4, 5 ; 22 ; 62, 63, 64, 65 ; 82 ; 102, 103, 104, 105 ; 122) pour un gaz laser ou un mélange de gaz laser, avec un agencement d'électrodes qui comprend au moins deux électrodes situées l'une en face de l'autre (9, 10 ; 29, 30 ; 69, 70 ; 89, 90 ; 109a, 110a, 109b, 110b;129a, 130a, 129b, 130b) et avec une unité d'alimentation en tension (12 ; 72 ; 112) au moyen de laquelle une tension alternative à haute fréquence, désignée dans la suite par tension HF, peut être appliquée à des électrodes de l'agencement d'électrodes, de sorte qu'il se forme dans le gaz laser ou le mélange de gaz laser une région de décharge dans laquelle le gaz laser ou le mélange de gaz laser est excité, l'unité d'alimentation en tension (12 ; 72 ; 112) étant conçue de façon que la tension HF appliquée à deux électrodes situées l'une en face de l'autre (9, 10 ; 29, 30 ; 69, 70 ; 89, 90 ; 109a, 110a, 109b, 110b ;129a, 130a, 129b, 130b) soit pulsée, ainsi qu'avec une unité de commande (14 ; 34 ; 74 ; 114) pour faire varier le rapport cyclique et/ou la fréquence d'échantillonnage de la tension HF appliquée aux électrodes,
**caractérisé en ce**
**que** la forme des surfaces d'électrode tournées l'une vers l'autre est conçue de façon qu'il soit possible, par le choix de fréquences d'échantillonnage différentes et/ou de rapports cycliques différents, de régler de manière ciblée différentes formes de canaux de décharge et de ce fait de manière ciblée différentes répartitions de l'intensité de la lumière laser sur la section du faisceau laser, désignée dans la suite par mode.

2. Laser selon la revendication 1, **caractérisé en ce que** pour modifier la puissance d'excitation couplée dans le gaz laser ou le mélange de gaz laser par les électrodes (9, 10 ; 29, 30; 69, 70 ; 89, 90 ; 109a, 110a, 109b, 110b; 129a, 130a, 129b, 130b) de l'agencement d'électrodes, l'amplitude de la tension HF appliquée aux électrodes de l'agencement d'électrodes est variable.

3. Laser selon la revendication 1 ou 2, **caractérisé en ce que** la puissance d'excitation couplée dans le gaz laser ou le mélange de gaz laser est variable entre 0 et plus de 8 kW.

4. Laser selon l'une des revendications précédentes, **caractérisé en ce que** plusieurs valeurs ou plages fixes pour la puissance d'excitation couplée dans le gaz laser ou le mélange de gaz laser sont réglables.

5. Laser selon l'une des revendications précédentes, **caractérisé en ce qu'**au moins une valeur ou plage fixe pour la puissance d'excitation couplée dans le gaz laser ou le mélange de gaz laser est supérieure à 2 kW.

6. Laser selon l'une des revendications précédentes, **caractérisé en ce que** le mode est réglable de façon continue par la variation de la puissance d'excitation couplée dans le gaz laser ou le mélange de gaz laser.

7. Laser selon l'une des revendications précédentes, **caractérisé en ce que** le profil des surfaces d'électrode tournées vers le gaz laser ou le mélange de gaz laser des électrodes (9, 10 ; 69, 70) suit essentiellement le profil de la surface du tube laser (2, 3, 4, 5 ; 22 ; 62, 63, 64, 65) pour le gaz laser ou le mélange de gaz laser.

8. Laser selon l'une des revendications précédentes, **caractérisé en ce que** les surfaces d'électrode des électrodes (9, 10) présentent au moins un retrait (16), comme une rainure, ledit au moins un retrait (16) étant prévu dans la région centrale de la surface d'électrode.

9. Laser selon la revendication 8, **caractérisé en ce que** le rapport entre la largeur (B) de l'électrode (9, 10) et la largeur (b) du retrait (16) est supérieur à 1,5.

10. Laser selon l'une des revendications 8 à 9, **caractérisé en ce que** le rapport entre la profondeur (t) du retrait (16) et la largeur (b) du retrait (16) est supérieur à 0,2.

11. Laser selon l'une des revendications 1 à 7, **caractérisé en ce que** les surfaces d'électrode des électrodes (69, 70) présentent des branches (80), les branches (80) étant prévues dans la région extérieure de la surface d'électrode.

12. Laser selon l'une des revendications 1 à 6, **caractérisé en ce que** les électrodes (29, 30 ; 89, 90; 109a, 110a; 129a, 130a) présentent en coupe transversale une forme essentiellement en U avec des branches dans la région extérieure de la surface d'électrode tournée vers le gaz laser ou le mélange de gaz laser.

13. Laser selon l'une des revendications 8 à 12, **caractérisé en ce que** l'on obtient aux fréquences d'échantillonnage élevées un profil d'amplification marqué au bord et aux basses fréquences d'échantillonnage un profil d'amplification marqué au centre et que des modes différents sont réglables de manière ciblée de ce fait.

14. Laser selon l'une des revendications 1 à 7 ou 12, **caractérisé en ce que** les surfaces d'électrode des électrodes (69, 70 ; 89, 90) présentent au moins une élévation (79 ; 99), comme une pointe ou une arête, ladite au moins une élévation (79 ; 99) étant prévue dans la région centrale de la surface d'électrode.

15. Laser selon la revendication 14, **caractérisé en ce que** l'élévation (79 ; 99) est formée par une conformation en arête de toit de la surface d'électrode.

16. Laser selon l'une des revendications 14 à 15, **caractérisé en ce que** l'on obtient aux fréquences d'échantillonnage élevées un profil d'amplification marqué au centre et aux basses fréquences d'échantillonnage un profil d'amplification marqué au bord et que des modes différents sont réglables de manière ciblée de ce fait.

17. Laser selon l'une des revendications précédentes, **caractérisé en ce que** la fréquence d'échantillonnage est variable entre 0 et plus de 100 kHz.

18. Laser selon l'une des revendications précédentes, **caractérisé en ce que** plusieurs fréquences d'échantillonnage fixes sont réglables.

19. Laser selon l'une des revendications précédentes, **caractérisé en ce qu'**au moins une fréquence d'échantillonnage est supérieure à 10 kHz.

20. Laser selon l'une des revendications précédentes, **caractérisé en ce qu'**une fréquence d'échantillonnage est supérieure à 50 kHz, de préférence supérieure à 80 kHz.

21. Laser selon l'une des revendications précédentes, **caractérisé en ce que** le mode est réglable de façon continue par la variation de la fréquence d'échantillonnage et/ou du rapport cyclique.

22. Laser selon l'une des revendications précédentes, **caractérisé en ce que** plus de deux électrodes (9, 10 ; 29, 30 ; 69, 70 ; 89, 90 ; 109a, 110a, 109b, 110b ; 129a, 130a, 129b, 130b) sont prévues.

23. Laser selon l'une des revendications précédentes, **caractérisé en ce qu'**au moins une partie des électrodes présente des surfaces tournées vers le gaz laser ou le mélange de gaz laser qui possèdent plusieurs régions de forme différente.

24. Laser selon l'une des revendications précédentes, **caractérisé en ce que** les électrodes (9, 10 ; 29, 30; 69, 70 ; 89, 90 ; 109a, 110a, 109b, 110b; 129a, 130a, 129b, 130b) de l'agencement d'électrodes sont disposées de manière décalée en direction circonférentielle du faisceau laser et/ou possèdent une courbure différente et/ou une extension azimutale différente et/ou des surfaces tournées vers le gaz laser ou le mélange de gaz laser de forme différente.

25. Laser selon l'une des revendications précédentes, **caractérisé en ce que** la conformation des surfaces tournées vers le gaz laser ou le mélange de gaz laser d'électrodes chaque fois associées l'une à l'autre par paire est identique.

26. Laser selon l'une des revendications précédentes, **caractérisé en ce que** les électrodes de l'agencement d'électrodes sont distantes au moins partiellement dans la direction de l'axe de faisceau laser.

27. Laser selon l'une des revendications précédentes, **caractérisé en ce que** les électrodes de l'agencement d'électrodes possèdent au moins partiellement une distance différente à l'axe du faisceau laser.
